(19) Europäisches Patentamt
European Patent Office
Office européen des brevets

(11) Veröffentlichungsnummer: **0 413 325 A2**

(12) **EUROPÄISCHE PATENTANMELDUNG**

(21) Anmeldenummer: **90115669.5**

(51) Int. Cl.5: **A01N 25/18**

(22) Anmeldetag: **16.08.90**

(30) Priorität: **18.08.89 DE 3927243**

(43) Veröffentlichungstag der Anmeldung: **20.02.91 Patentblatt 91/08**

(84) Benannte Vertragsstaaten: **AT CH DE FR LI SE**

(71) Anmelder: **BASF Aktiengesellschaft**
**Carl-Bosch-Strasse 38**
**D-6700 Ludwigshafen(DE)**

(72) Erfinder: **Angerer, Winfried, Dr.**
**Jose C. Paz 1393**
**1640 Martinez/BS.AS(AR)**
Erfinder: **Buschmann, Ernst, Dr.**
**Georg-Ludwig-Krebs-Strasse 10**
**D-6700 Ludwigshafen(DE)**
Erfinder: **Holtmann, Heinrich, Dr.**
**Kaiser-Karl-Strasse 15**
**D-6535 Gau-Algesheim(DE)**
Erfinder: **Vite, Jean Pierre, Prof. Dr.**
**Bertoldstrasse 17**
**D-7800 Freiburg(DE)**
Erfinder: **Baader, Ernst, Dr.**
**Bertoldstrasse 17**
**D-7800 Freiburg(DE)**

(54) **Vorrichtung zur Bekämpfung von Borkenkäfern insbesondere des Buchdruckers.**

(57) Vorrichtung zur Bekämpfung von Borkenkäfern, insbesondere des Buchdruckers, gekennzeichnet durch eine oder zwei geschlossene Kammern von 0,1 bis 5 ml Fassungsvermögen mit einer Wandstärke von 0,1 bis 1 mm, vorzugsweise 0,2 bis 0,6 mm, wobei als Wandmaterial ein Ethylen/Vinylacetat-Copolymerisat mit einem Vinylacetatanteil von 10 bis 15 % dient, enthaltend das Aggregationspheromon dieses Borkenkäfers, mit einer angeformten Aufhängevorrichtung.

EP 0 413 325 A2

## VORRICHTUNG ZUR BEKÄMPFUNG VON BORKENKÄFERN INSBESONDERE DES BUCHDRUCKERS

Pheromone haben als Mittel zur Insektenbekämpfung auch im Waldschutz zunehmende Bedeutung erlangt. Zahlreiche Borkenkäferpheromone wurden gefunden, die gute Chancen für die biotechnische Bekämpfung dieser Schädlinge eröffnen. (J.P. Vit∞e, Biologie in unserer Zeit 8, 112 (1978)). Die erfolgversprechendste Methode ist der Massenfang in Fallensystemen mit Hilfe der bekannten Lockstoffe (Pheromone). Dafür sind geeignete Wirkstoffdispenser erforderlich, die eine langanhaltende gleichmäßige Präsenz der Wirkstoffe sicherstellen und damit gute Fangergebnisse erzielen. Diese Dispenser müssen zudem einfach und in großen Mengen herstellbar sein, um einen wirtschaftlichen Einsatz zu gewährleisten.

Einer der gefährlichsten Borkenkäfer für den Bestand der Wälder Mittel-und Nordeuropas ist der Buchdrucker (Ips typographus). Das Aggregationspheromon dieses Käfers besteht aus 2-Methyl-3-buten-2-ol (oder ersatzweise 2-Methyl-3-butin-2-ol), S-cis-Verbenol und Ipsdienol (A. Bakke etal. Naturwissenschaften 64, 98 (1977). H. Erdmann et al. J. Chem. Ecol. 13 (6), 1555 (1987)). Es kann Verwendung zum Fang dieses Borkenkäfers finden. Als Wirkstoffdispenser für das Buchdruckerpheromon sind Folienbeutel beschrieben (DE-OS 2832 248, 2945 655), wobei der Wirkstoff im Inneren dieser Beutel in eine Paste oder ein Schwammtuch eingearbeitet ist. Die Abgabezeit dieser Dispenser ist nicht ausreichend, sodaß während einer Saison ein mehrmaliger Wechsel der Dispenser in den Fallenkörpern erforderlich wird. Zudem wird die Folie bei Transport und Handhabung der Dispenser leicht verletzt, was eine weitere Qualitätsminderung bedeutet. Im Zusammenhang mit Pheromonen von Schmetterlingen sind auch andere Dispenser beschrieben, insbesondere Röhrchen aus Polyethylen (P.J. Charmillot et al. Ent. exp. and Appl. 19 (1979) 139-147), die auch zur besseren Handhabbarkeit mit einem Draht verstärkt sein können. (US-Patent Nr. 4600 146). Das US-Patent Nr. 4734 281 beschreibt die Problematik der gleichzeitigen Verdampfung von Wirkstoffen unterschiedlicher Struktur aus einem Gefäß. Je größer die Unterschiede zwischen den Wirkstoffkomponenten sind, desto schwieriger ist es ein geeignetes Abgabesystem zu finden. Beim Buchdruckerpheromon liegt neben Ipsdienol eine Mischung von zwei sehr unterschiedlichen Wirkstoffen vor:

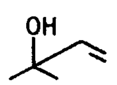

Methylbutenol

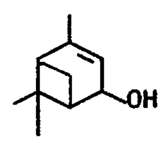

Verbenol

Methylbutenol besteht aus 5 Kohlenstoffatomen. Die zweite Komponente S-cis-Verbenol besitzt die doppelte Anzahl Kohlenstoffatome. Deshalb fanden bisher auch die von der Herstellung recht aufwendigen Foliendispenser (DE-OS 2832 848, 2945 655) für das Buchdruckerpheromon vorteilhaft Verwendung und nicht die bereits früher beschriebenen und später weit genutzten Röhrchendispenser (EP-Patentanmeldungen 61 192, 160 151, 194 934, 236 188, 243 007, 243 263).

Es wurde überraschend gefunden, daß durch herstellbare Dispenser mit einer bevorzugten Wandstärke von 0,2 bis 0,6 mm, und bei Verwendung von Ethylen/Vinylacetat-Copolymerisat mit einem Vinylacetatanteil von 10 bis 15 Prozent eine gleichzeitige Abgabe der unterschiedlichen Pheromonkomponenten des Buchdruckerpheromons erreicht wird. Ebenfalls als Voraussetzung für die biotechnische Bekämpfung des Schädlings ist eine - über die gesamte Wirkungsdauer gleichmäßige, genügend hohe und vor allem vom jeweiligen Füllstand unabhängige - Freisetzung der Pheromonkomponenten, was mittels dem im Anspruch angegebenen Verhältnis von maximalem Füllvolumen und Abdampfoberfläche je Kammer erreicht wird. Damit hebt sich die im Anspruch beschriebene Vorrichtung vom Stand der Technik ab, bei der eine sinkende Wirkstoffabgabe mit der Zeit erfolgt. Das gleichzeitige Vorhandensein zweier von einander unabhängiger Kammern ermöglicht zudem die kontrollierte Freisetzung weiterer Pheromonkomponenten, falls dies gewünscht wird. Das gewählte maximale Füllvolumen wurde auf die Belange des Buchdruckers ausgerichtet, so daß mit einem Dispenser je Falle die Flugzeit dieses Schädlings ohne zusätzliche Mehrarbeit abgedeckt wird. Die eingesetzten Ampullendispenser werden zudem, um eine Lichtschädigung des Lockstoffes bis zu seinem Einsatz zu verhindern, mit einem anorganischen Pigment eingefärbt.

Beispiel

Die Überlegenheit der erfindungsgemäßen Dispenser zeigte sich beispielsweise bei der Anwendung in Verbindung mit Schlitzfallen in Fichtenkulturen.

Anflug von Ips typographus (Mittelwert und Standardfehler des Mittelwertes) an Schlitzfallen (Buchenbach) Schwarzwald, 08.05.-16.05.89, zwei Fallendreiecke, zwei Ablesungen.

| | $X^n$ | $^{1}$ SE | % |
|---|---|---|---|
| kommerzieller Köder (Pheroprax) DE-OS 2945 655 | 52,3 | $^{1}$ 24,5 | 100 % |
| erfindungsgemäße Ampulle | 63,7 | $^{1}$ 30,5 | 122 % |

Beide Dispenser enthielten 70 mg S-cis-Verbenol und 1,5 ml 2-Methyl-3-buten-2-ol.

Ein weiterer Versuch zeigt die überraschende Überlegenheit des erfindungsgemäßen Dispensers gegenüber früher beschriebenen Ampullen aus Polyethylen (DOS 36 40 880).

Anflug von Ips typographus an Schlitzfallen mit unterschiedlichen Dispensern (Buchenbach) Schwarzwald, 11.04. - 05.05.89, drei Fallenbereiche, zwei Ablesungen. Beide Dispensertypen enthielten 70 mg S-cis-Verbenol und 0,7 m 2-Methyl-3-buten-2-ol und 20 mg Ipsdienol.

| | $X^n$ | $^{1}$ SE |
|---|---|---|
| Polyethylendispenser (DE-OS 36 40 880) | 8,0 | $^{1}$ 3,69 |
| Polyethylenvinylacetatdispenser | 41,0 | $^{1}$ 17,31 |

## Ansprüche

1. Vorrichtung zur Bekämpfung von Borkenkäfern, insbesondere des Buchdruckers, gekennzeichnet durch eine oder zwei geschlossene Kammern von 0,1 bis 5 ml Fassungsvermögen mit einer Wandstärke von 0,1 bis 1 mm, vorzugsweise 0,2 bis 0,6 mm, wobei als Wandmaterial ein Ethylen/Vinylacetat-Copolymerisat mit einem Vinylacetatanteil von 10 bis 15 % dient, enthaltend das Aggregationspheromon dieses Borkenkäfers, mit einer angeformten Aufhängevorrichtung.

2. Vorrichtung nach Anspruch 1, dadruch gekennzeichnet daß einem maximalen Füllvolumen von 2,5 ml je Kammer eine Abdampfoberfläche von ca. 5 $cm^2$ je Kammer gegenübersteht.

3. Verfahren zur Bekämpfung von Borkenkäfern unter Verwendung der Vorrichtung nach Anspruch 1 und 2, dadurch gekennzeichnet, daß die Vorrichtung in Verbindung mit Pheromonfallen angewendet wird.

4. Verfahren nach Anspruch 3, dadurch gekennzeichnet, daß als Pheromon (Lockstoff) eine Mischung aus 2-Methyl-3-buten-2-ol oder 2-Methyl-3-butin-2-ol und S-cis-Verbenol und gegebenenfalls zusätzlich Ipsdienol verwendet wird.